# EUROPÄISCHE PATENTSCHRIFT

(11) **EP 1 727 843 B1**
(45) Veröffentlichungstag und Bekanntmachung des Hinweises auf die Patenterteilung: **05.10.2011**
(21) Anmeldenummer: 05715754.7
(22) Anmeldetag: 05.03.2005
(51) Int. Cl.: C08G 18/10, C08G 18/42, C08J 7/04

(54) **WÄSSRIGE PUR-DISPERSIONEN MIT VERBESSERTER HAFTUNG**
AQUEOUS PUR DISPERSION WITH IMPROVED ADHESIVE CHARACTERISTICS
DISPERSIONS PUR AQUEUSES A ADHERENCE AMELIOREE

(30) Priorität: 18.03.2004 DE 102004013259
(43) Veröffentlichungstag der Anmeldung: 06.12.2006
(73) Patentinhaber: Bayer MaterialScience AG, 51368 Leverkusen (DE)
(72) Erfinder: MÜNZMAY, Thomas, 41539 Dormagen (DE); POHL, Torsten, Pittsburgh, PA 15216 (US); KLIPPERT, Uwe, 51399 Burscheid (DE)
(86) Internationale Anmeldenummer: PCT/EP2005/002332
(87) Internationale Veröffentlichungsnummer: WO 2005/092941

(56) Entgegenhaltungen:
- EP-A- 1 283 230
- DE-A- 1 720 176
- US-A- 4 237 264

## Beschreibung

Die Erfindung betrifft neue wässrige Polyester-Polyurethan-Dispersionen, Beschichtungsmittel enthaltend diese Dispersionen sowie die daraus hergestellten Lacke.

Ionisch modifizierte Polyurethan-Dispersionen und deren wässrige Zubereitungen sind bekannter Stand der Technik. Ein wichtiges Einsatzgebiet wässriger Zubereitungen ionisch modifizierter Polyurethane liegt im Bereich der Lackierung von Kunststoffteilen.

Seit Jahren gehen die Bemühungen zur Gewichtseinsparung im Automobil einher mit vermehrtem Kunststoffeinsatz, auch im Innenbereich. Aufgrund ästhetischer und technischer Anforderungen werden Kunststoffteile im Automobil üblicherweise lackiert, um den Kunststoff vor äußeren Einflüssen, wie Sonnenlicht, chemischer, thermischer und mechanischer Beanspruchung zu schützen, um bestimmte Farbtöne und Farbeffekte zu erzielen, um Fehlstellen der Kunststoffoberfläche zu überdecken oder um der Kunststoffoberfläche einen angenehmen Griff (Haptik) zu verleihen. Um die haptischen Eigenschaften von Kunststoffteilen im Automobilinnenraum zu verbessern werden in den letzten Jahren vermehrt sogenannte Softfeel-Lacke eingesetzt. "Softfeel-Effekt" im Sinne der vorliegenden Erfindung bezeichnet ein besonderes Griffempfinden (Haptik) der lackierten Oberfläche. Diese Haptik lässt sich mit Begriffen wie samtig, weich, gummiartig oder warm umschreiben, während sich z.B. die Oberfläche einer lackierten Auto-Karosse oder auch eine unlackierte oder mit einem üblichen Klar- oder Decklack beschichtete Kunststoff-Platte wie z.B. ABS, Makrolon^{®} (Polycarbonat, Bayer AG) oder Plexiglas kalt und glatt anfühlt.

Dem Trend folgend, Emissionen von Lösemitteln in die Umwelt zu vermeiden, haben sich in den letzten Jahren wässrige Softfeel-Lacke auf Basis der Polyurethanchemie durchgesetzt, wie sie beispielhaft in der DE-A1 44 06 159 offenbart wurden. Diese Lacke ergeben neben einem ausgezeichneten Softfeel-Effekt auch Beschichtungen mit guter Beständigkeit und Schutzwirkung für das Kunststoffsubstrat.

Inzwischen hat sich aber gezeigt, dass auch diese Lacke keine ausreichende Haftung zu zahlreichen Kunststoffsubstraten haben. Um diesen Nachteil zu beheben, erfolgt der Lackaufbau hochwertiger Kunststoffteile nach heutigem Stand der Technik zwei- oder dreischichtig. Ein solcher Schichtaufbau setzt sich zusammen aus Grundierung (Primer), gegebenenfalls einem Basislack und einem Decklack. Die Grundierung übernimmt dabei die Funktion des Haftvermittlers zwischen Substrat und Lack.

Daher sind im Gebiet der Lackierung von Kunststoffteilen Produkte gefragt, die über gute Softfeeleigenschaften und gleichzeitig über eine gute Haftung zu den Substraten verfügen. Diese können dann auch ohne Grundierung in einem einschichtigen Lackaufbau eingesetzt werden.

In der DE-A1 2 651 506 wird ein Verfahren zur Herstellung von in Wasser dispergierbaren Polyurethanen offenbart. Diese Verfahrensprodukte sind jedoch nicht zum Einsatz als einschichtiger Softfeel-Lack von Kunststoffteilen geeignet, da sie nicht über die notwendigen Hafteigenschaften verzügen.

Ebenfalls werden Softfeel-Lacke in der DE-A1 44 06 159 beschrieben. Dort werden jedoch keine zufriedenstellende Haftungseigenschaften der Lackschichten erhalten.

Die Lehre der DE-A1 101 38 765 offenbart, dass der Einsatz von auf aromatischen Diolen gestarteten Polyethern in wässrigen Polyurethan-(PUR)-Dispersionen zu Produkten führt, welche aufgrund ihrer verbesserten Haftung auf verschiedenen Substraten als Grundierbinder geeignet sind. Die Produkte sind aber aufgrund ihrer ungenügenden Haptik nicht als Softfeel-Lacke geeignet.

Aufgabe der vorliegende Erfindung bestand in der Bereitstellung von wässrigen Polyurethan-Dispersionen, die sich als Softfeellacke eignen und gleichzeitig über eine ausgezeichnete Haftung zu Kunststoffsubstraten verfügen.

Es wurde nun gefunden, dass Polyurethan-Dispersionen die Polyesterpolyole enthalten, wobei diese einen Anteil auf aromatischen Dicarbonsäuren basierender Polyesterpolyole von mehr als 60 Gew.-% aufweisen, die Haftungseigenschaften der damit herstellbaren Überzüge auf Kunststoffsubstraten wesentlich verbessern.

Gegenstand der vorliegenden Erfindung ist ein Verfahren zur Herstellung von Polyester-Polyurethanharz-Dispersionen, dadurch gekennzeichnet, dass
i) ein oder mehrere Polyol-Komponenten i) mit einem mittleren Molekulargewicht von mindestens 300 Dalton, wobei mindestens eine der Komponenten ein Polyester-Polyol ist und der auf aromatischen Polycarbonsäuren basierende Anteil Polyesterpolyol mehr als 60 Gew.-% beträgt,
ii) gegebenenfalls eine oder mehrere Polyolkomponenten mit einem mittleren Molekulargewicht von 62 bis 299 Dalton,
iii) gegebenenfalls eine im Sinne der Isocyanatpolyadditionsreaktion monofunktionelle Verbindung mit einem Ethylenoxidgehalt von mindestens 50 Gew.-% und einem Molekulargewicht von mindestens 400 Dalton mit
iv) einem Polyisocyanat zu einem Prepolymer umgesetzt werden, dieses Prepolymer in einem organischen Lösemittel gelöst und mit
v) einem oder mehreren aliphatischen Polyaminen mit einem Molekulargewicht von 60 bis 300 Dalton oder Hydrazin und
vi) einem hydrophilierten aliphatischen Diamin umgesetzt wird, anschließend durch Zugabe von Wasser die Dispersion ausgefällt und das organische Lösemittel entfernt wird.

Ebenfalls Gegenstand der vorliegenden Erfindung sind Polyester-Polyurethanharz-Dispersionen erhältlich gemäß dem erfindungsgemäßen Verfahren.

Im Rahmen der Erfindung umfasst der Begriff "Polyurethan" auch "Polyurethan-Polyharnstoffe", d.h. hochmolekulare Verbindungen, die neben Urethan- auch Harnstoffgruppen enthalten.

Für die erfindungsgemäßen wässrigen Polyester-Polyurethanharz-Dispersionen geeignete Aufbaukomponenten i) sind organische Verbindungen, die mindestens zwei freie Hydroxylgruppen enthalten, die zur Reaktion mit Isocyanatgruppen befähigt sind. Beispiele für derartige Verbindungen sind höhermolekulare Verbindungen aus den Klassen der Polyester-, Polyesteramid-, Polycarbonat-, Polyacetal- und Polyetherpolyole mit Molekulargewichten von mindestens 300, bevorzugt 500 bis 8000, besonders bevorzugt 800 bis 5000. Bevorzugte Verbindungen sind beispielsweise solche, die zwei Hydroxylgruppen (difunktionell) enthalten, wie Polyesterdiole oder Polycarbonatdiole.

Als Polyesterpolyole i) kommen insbesondere lineare Polyesterdiole oder auch schwach verzweigte Polyesterpolyole in Betracht, wie sie in bekannter Weise aus aliphatischen, cycloaliphatischen und aromatischen Di- oder Polycarbonsäuren bzw. ihren Anhydriden, wie z.B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride, wie o-Phthal-, Trimellit- oder Bernsteinsäureanhydrid oder deren Gemisch und mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan oder Glycerin, hergestellt werden können. Als mehrwertige Alkohole zur Herstellung der Polyesterpolyole i) kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester i) verwendet werden.

Als Polyolkomponenten kommen auch Homo- oder Mischpolymerisate von Lactonen in Frage, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z. B. die vorstehend als Aufbaukomponenten für Polyesterpolyole genannten niedermolekularen, mehrwertigen Alkohole, erhalten werden.

Auch Hydroxylgruppen aufweisenden Polycarbonate kommen als Polyolkomponenten i) in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethylcarbonat oder Phosgen hergestellt werden können, mit einem Molekulargewicht von 800 bis 5 000.

Als aromatische Aufbaukomponenten i) kommen bevorzugt Polyesterpolyole auf Basis von Dicarbonsäuren oder deren Anhydride wie o-Phthal-, iso-Phthal- und Terephthalsäure und Glykole wie 1,4-Butandiol, 1,6-Hexandiol und/oder 2,2-Dimethyl-1,3-propandiol (Neopentylglykol) in Betracht. Besonders bevorzugt werden die aromatischen Dicarbonsäuren oder deren Anhydride in Mischung mit Polyesterdiolen auf Basis von Adipinsäure und Glykolen wie 1,4-Butandiol, 1,6-Hexandiol und/oder 2,2-Dimethyl-1,3-propandiol (Neopentylglykol) eingesetzt. Ebenfalls besonders bevorzugt werden Mischpolymerisate des 1,6-Hexandiols mit ε-Caprolacton und Diphenylcarbonat oder Dimethylcarbonat mit einem Molekulargewicht von 1 000 bis 4 000, sowie Polycarbonatdiole mit einem Molekulargewicht von 1 000 bis 3 000 eingesetzt.

Ebenfalls bevorzugt sind Mischpolymerisate aus aromatischen und aliphatischen Dicarbonsäuren oder deren Anhydriden und den genannten Glykolen.

Als Polyolkomponenten i) kommen weiterhin Polyetherpolyole in Betracht z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Erfindungswesentlich ist, dass der Anteil aromatischer Carbonsäuregruppen bezogen auf die Gesamtheit der zur Herstellung der Polyester-Komponente eingesetzten Carbonsäuregruppen in der Polyol-Komponente i) mindestens 60 mol-%, bevorzugt mindestens 70 mol-% und besonders bevorzugt mindestens 80 mol-% beträgt. Bezogen auf die Polyol-Komponente i) sollte der auf aromatischen Polycarbonsäuren basierende Anteil Polyesterpolyol bevorzugt mehr als 60 Gew.-% betragen.

Geeignete Aufbaukomponenten ii) sind Diole des Molekulargewichtsbereichs 62 bis 299. Es kommen als solche beispielsweise die zur Herstellung der Aufbaukomponenten i) genannten mehrwertigen, insbesondere zweiwertigen Alkohole sowie weiterhin niedermolekulare Polyesterdiole, wie z. B. Adipinsäure-bis-(hydroxyethyl)-ester oder kurzkettige auf aromatischen Diolen gestartete Homo- und Mischadditionsprodukte des Ethylenoxid oder des Propylenoxid in Frage. Bevorzugte Aufbaukomponenten ii) sind 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Die erfindungsgemäßen Polyester-Polyurethanharz-Dispersionen weisen, bezogen auf Feststoff, einen Gehalt von 0 bis 4 Gew.-% an end- und/oder seitenständig eingebauten Ethylenoxideinheiten, die durch Mitverwendung der Aufbaukomponenten iii) beim Isocyanatpolyadditionsprozess auf einfache Weise eingebaut werden können, auf.

Hydrophile Aufbaukompnenten iii) zum Einbau endständiger hydrophiler Ethylenoxideinheiten aufweisender Ketten sind Verbindungen der Formel (I),

H-Y'-X-Y-R (I)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Kettengliedern, welche zu- mindest zu 40 %, bevorzugt zumindest zu 65 % aus Ethylenoxid-Einheiten bestehen und die neben Ethylenoxid-Einheiten aus Propylenoxid-, Butylenoxid- oder Styroloxid-Ein- heiten bestehen können, wobei unter den letztgenannten Einheiten Propylenoxid-Einheiten bevorzugt sind, steht und
- Y/Y: für Sauerstoff oder auch für -NR'- steht, wobei R' bezüglich seiner Definition R oder Wasserstoff entspricht.

Vorzugsweise werden monofunktionelle Aufbaukomponenten iii) jedoch nur in Molmengen von ≤ 10 mol-%, bezogen auf das verwendete Polyisocyanat, eingesetzt, um den gewünschten hochmolekularen Aufbau der Polyurethan-Elastomeren zu gewährleisten. Bei der Verwendung größerer Molmengen an monofunktionellen Alkylenoxidpolyethern ist die Mitverwendung von trifunktionellen gegenüber Isocyanat reaktive Wasserstoffatome aufweisenden Verbindungen von Vorteil, jedoch mit der Maßgabe, dass das Mittel der Funktionalität der Ausgangsverbindungen i) bis iii) nicht größer als 2,7, bevorzugt nicht größer als 2,3 ist. Die Herstellung der monofunktionellen, hydrophilen Aufbaukomponenten erfolgt in Analogie zu den in der DE-A 2 314 512 oder DE-A 2 314 513 bzw. in der US-A 3 905 929 oder US-A 3 920 598 beschriebenen Weise durch Alkoxylierung eines monofunktionellen Starters wie z.B. n-Butanol oder N-Methyl-butylamin unter Verwendung von Ethylenoxid und gegebenenfalls einem weiteren Alkylenoxid wie z.B. Propylenoxid.

Bevorzugt als Aufbaukomponenten iii) sind die Mischpolymerisate des Ethylenoxids mit Propylenoxid mit einem Ethylenoxidmassenanteil größer 50 %, besonders bevorzugt von 55 bis 89%.

In einer bevorzugten Ausführungsform werden als Aufbaukomponenten iii) Verbindungen mit einem Molekulargewicht von mindestens 400 Dalton, bevorzugt von mindestens 500 Dalton und besonders bevorzugt von 1200 bis 4500 Dalton eingesetzt.

Als Aufbaukomponenten iv) geeignet sind beliebige organische Verbindungen, die mindestens zwei freie Isocyanatgruppen pro Molekül aufweisen, wie z.B. Diisocyanate X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Weitere Beispiele von als Diisocyanatkomponente verwendbaren Verbindungen werden z. B. von W. Siefken in Justus Liebigs Annalen der Chemie, 562, S. 75-136, beschrieben.

Beispiele für bevorzugt einzusetzende Diisocyanate sind Tetramethylendiisocyanat, Methylpentamethylendiisocyanat, Hexamethylendiisocyanat-1,6, Dodecamethylendiisocyanat, 1,4-Diisocyanato-cyclohexan, 1-Isocyanato-3,3,5-trimethyl-5-isocyanatomethyl-cyclohexan, 4,4'-Diisocyanatodicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, 1,3- und 1,4-Diisocyanatomethyl-benzol, sowie aus diesen Verbindungen bestehende Gemische. Besonders bevorzugt sind Hexamethylendiisocyanat-1,6, 1-Isocyanato-3,3,5-trimethyl-5-iso-cyanatomethyl-cyclohexan (Isophorondiisocyanat) und 4,4'-Diisocyanato-dicyclohexylmethan.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Als Aufbaukomponenten v) kommen aliphatische und/oder alicyclische primäre und/oder sekundäre Polyamine in Frage, bevorzugt sind z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan, Adipinsäuredihydrazid oder Diethylentriamin sowie Hydrazin oder Hydrazinhydrat.

Weitere geeignete Polyamine umfassen Polyetherpolyamine, die formal durch Ersatz der Hydroxylgruppen der oben beschriebenen Polyetherpolyole durch Aminogruppen zustande kommen. Solche Polyetherpolyamine kann man durch Umsetzung der entsprechenden Polyetherpolyole mit Ammoniak und/oder primären Aminen herstellen.

Besonders bevorzugt sind als Aufbaukomponenten v) 1-Amino-3,3,5-trimethyl-5-aminomethyl-cyclohexan (Isophorondiamin), 1,2-Ethandiamin, Piperazin und Diethylentriamin.

Die erfindungsgemäßen Polyester-Polyurethanharz-Dispersionen weisen, bezogen auf Feststoff, einen Gehalt von 1,5 bis 30, bevorzugt von 3 bis 13,5 mmol Alkalimetallsalzen von Sulfonsäuren/100 g Polyurethanharz, auf. Der Einbau derartiger ionischer Gruppen gelingt in bekannter Weise durch Mitverwendung von Aufbaukomponenten vi), wie z.B. Alkali-Sulfonatgruppen enthaltenden Di- oder Polyaminen beim Aufbau der erfindungsgemäßen Polyurethan-Harze. Beispiele für geeignete Verbindungen vi) sind die Alkalisalze der N-(2-Aminoethyl)-2-aminoethansulfonsäure. Bevorzugt ist das Natriumsalz. Selbstverständlich können auch die freien Sulfonsäuren beim Isocyanatpolyadditionsprozess eingebaut werden. Diese müssen dann vor der Überführung der Polyurethan-Harze in Wasser neutralisiert werden, z.B. durch Zusatz von Alkalihydroxiden, Alkalihydrogencarbonaten oder Alkalicarbonaten.

Üblicherweise werden 20 bis 94,5 Gew.-Teile, bevorzugt 30 bis 80 Gew.-Teile und besonders bevorzugt 50 bis 76,5 Gew.-Teile der Komponente i), 0 bis 30 Gew.-%, bevorzugt 0 bis 15 Gew.-% der Komponente ii), 0 bis 10 Gew.-Teile, bevorzugt 0,5 bis 6 Gew.-Teile der Komponente iii), 4,5 bis 50 Gew.-Teile, bevorzugt 5 bis 30 Gew.-Teile und besonders bevorzugt 7,5 bis 20 Gew.-Teile der Komponente iv), 0,5 bis 13 Gew.-Teile, bevorzugt 1 bis 5 Gew.-Teile der Komponente v) und 0,5 bis 8 Gew.-Teile, bevorzugt 1,5 bis 5,5 Gew.-Teile der Komponente vi) eingesetzt mit der Vorgabe, dass die Summe der Komponenten 100 Gew.-% ergibt.

Die Herstellung der erfindungsgemäßen Polyurethanharz-Dispersionen erfolgt nach dem Aceton-Verfahren (D. Dieterich in Houben-Weyl: Methoden der Organischen Chemie, Band E20, S. 1670-81 (1987)).

Im Aceton-Verfahren erfolgt der Aufbau der den erfindungsgemäßen Dispersionen zugrunde liegenden wässrigen Zubereitungen von Polyurethan-Harzen in einem mehrstufigen Prozess.

In einer ersten Stufe wird aus den Aufbaukomponenten i) bis iv) ein Isocyanatgruppen enthaltendes Prepolymer aufgebaut. Die Einsatzmengen der Einzelkomponenten wird dabei so bemessen, dass eine Isocyanatkennzahl von 1,1 bis 3,5, bevorzugt von 1,3 bis 2 resultiert. Der Isocyanatgehalt der Prepolymere liegt zwischen 1,5 und 7,5 %, bevorzugt zwischen 2 und 4,5 % und besonders bevorzugt zwischen 2,5 und 3,5 %. Weiterhin ist bei der Bemessung der Aufbaukomponenten i) bis iv) darauf zu achten, dass die rechnerische, zahlenmittlere Funktionalität zwischen 1,80 und 3,50, bevorzugt zwischen 1,95 und 2,25 liegt.

In einer zweiten Stufe wird das in Stufe 1 hergestellte Prepolymer in einem organischen, zumindest teilweise wassermischbaren Lösemittel, welches keine isocyanatreaktiven Gruppen trägt, gelöst. Bevorzugtes Lösemittel ist Aceton. Es können aber auch andere Lösemittel, wie beispielsweise 2-Butanon, Tetrahydrofuran oder Dioxan oder Gemische dieser Lösemittel verwendet werden. Die Mengen an einzusetzenden Lösemittel sind so zu bemessen, dass ein Feststoffgehalt von 20 bis 80 Gew.-%, bevorzugt von 30 bis 50 Gew.-%, besonders bevorzugt von 35 bis 45 Gew.-% resultiert.

In einer dritten Stufe wird die isocyanathaltige Prepolymerlösung mit Mischungen der aminofunktionellen Aufbaukomponenten v) bis vi) unter Kettenverlängerung zum hochmolekularen Polyurethan-Harz umgesetzt. Die Mengen der Aufbaukomponenten werden so bemessen, dass pro Mol Isocyanatgruppen des gelösten Prepolymern 0,3 bis 0,93 Mol, bevorzugt 0,5 bis 0,85 Mol primäre und/oder sekundäre Aminogruppen der Aufbaukomponenten v) bis vi) resultieren. Die rechnerische, zahlenmittlere Isocyanatfunktionalität des resultierenden erfindungsgemäßen Polyester-Polyurethan-Harzes beträgt zwischen 1,55 und 3,10, bevorzugt zwischen 1,90 und 2,35. Das rechnerische, zahlenmittlere Molekulargewicht (Mn) beträgt zwischen 4500 und 250000, bevorzugt zwischen 10000 und 80000 Dalton.

In einer vierten Stufe wird das hochmolekulare Polyurethan-Harz durch Zugabe von Wasser zur Lösung in Form einer feinteiligen Dispersion ausgefällt.

Gegebenenfalls werden zwischen dem dritten und vierten Schritt eingebaute, freie Sulfonsäuregruppen neutralisiert.

In einer fünften Stufe wird das organische Lösungsmittel, gegebenenfalls unter vermindertem Druck, ganz oder teilweise abdestilliert. Die Wassermenge wird bei Stufe vier so bemessen, dass die erfindungsgemäßen wässrigen Polyester-Polyurethanharz-Dispersionen einen Feststoff von 30 bis 65, bevorzugt von 35 bis 55 Gew.-% aufweisen.

Die die erfindungsgemäßen Polyester-Polyurethanharz-Dispersionen enthaltenden Beschichtungsmittel können als wässrige Softfeel-Lacke verwendet werden, da sie sich durch eine hervorragende Haftung sowohl zu diversen Substratoberflächen, bevorzugt Kunststoffsubstrate, als auch zu nachfolgenden Lackschichten, durch eine verbesserte Schwitzwasser- und Lösemittelbeständigkeit des gesamten Lackaufbaus und durch ihren extrem geringen VOC auszeichnen.

Daher sind ebenfalls Gegenstand der vorliegenden Erfindung Beschichtungsmittel enthaltend
A) 15 bis 45 Gew.-Teile einer erfindungsgemäßen wässrigen Polyester-PolyurethanharzDispersion,
B) 15 bis 45 Gew.-Teile eines hydroxyfunktionellen, wässrigen oder wasserverdünnbaren Bindemittels,
C) 0 bis 60 Gew.-Teile anorganische Füllstoffe und/oder Mattierungsmittel,
D) 1 bis 60 Gew.-Teile eines Polyisocyanates,
E) 0,1 bis 30 Gew.-Teile Pigmente und
F) 1 bis 15 Gew.-Teile üblicher Lackhilfsmittel,
wobei die Summe der Komponenten 100 ergibt.

Die erfindungsgemäßen Beschichtungsmittel enthalten 15 bis 45-Gew.-Teile, bevorzugt 25 bis 37,5 Gew.-Teile, besonders bevorzugt 30 bis 35 Gew.-Teile A), 15 bis 45-Gew.-Teile, bevorzugt 25 bis 37,5 Gew.-Teile, besonders bevorzugt 30 bis 35 Gew.-Teile B), 0 bis 60 Gew.-Teile, bevorzugt 4 bis 45 Gew.-Teile, besonders bevorzugt 7,5 bis 30 Gew.-Teile C), 1 bis 60-Gew.-Teile, bevorzugt 2,5 bis 30 Gew.-Teile, besonders bevorzugt 4 bis 20 Gew.-Teile D), 0,1 bis 15-Gew.-Teile, bevorzugt 5 bis 25 Gew.-Teile, besonders bevorzugt 10 bis 20 Gew.-Teile E) und 1 bis 15-Gew.-Teile, bevorzugt 1,5 bis 10 Gew.-Teile, besonders bevorzugt 2 bis 6 Gew.-Teile F).

Geeignete Beschichtungsmittelkomponenten B) sind hydroxyfunktionelle Polymere aus den Klassen der Polyester, Polyurethane und Polyacrylate bzw. Misch-, Pfropf- oder Kopolymerisate der genannten Polymertypen, wie sie beispielsweise in der EP-A 0 542 105 beschrieben sind. Besonders bevorzugt sind wässrige oder wasserverdünnbare Zubereitungen von hydroxyfunktionellen Polyurethanen oder Polyacrylaten oder Pfropfpolymerisate von Acrylaten auf Polyurethanen. Besonders bevorzugt sind wässrige oder wasserverdünnbare Zubereitungen von hydroxyfunktionellen Polyurethanen vom Typ Polyesterpolyurethan.

Als Beschichtungsmittelkomponenten D) werden Polyisocyanate mit freien NCO-Gruppen eingesetzt. Geeignet sind beispielsweise solche, auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Allophanat-, Uretdion-, Biuret- oder Isocyanuratgruppen aufweisende Polyisocyanate von 1,6-Diisocyanatohexan, Isophorondiisocyanat oder Bis-(4-isocyanatocyclohexan)-methan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Bevorzugt als Beschichtungsmittelkomponenten D) sind niedrigviskose, hydrophobe oder hydrophilierte Polyisocyanate mit freien Isocyanatgruppen auf Basis aliphatischer, cycloaliphatischer, araliphatischer und/oder aromatischer Isocyanate, besonders bevorzugt sind aliphatische oder cycloaliphatische Isocyanate. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden. Wasserlösliche bzw. dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 beschrieben. Gut geeignet sind auch die in der EP-A0 959 087 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 10 007 8 21 beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10 024 624 beschrieben sind. Ebenso möglich ist die Hydrophilierung durch Zusatz handelsüblicher Emulgatoren.

Der Einsatz von mit hydrophil modifizierten Polyisocyanaten als Beschichtungsmittelkomponente D) ist bevorzugt. Besonders bevorzugt sind mit Sulfonatgruppen modifizierte Polyisocyanate, wie sie z.B. in der DE-A 10 024 624 S. 3 Z. 22 bis S. 5 Z. 34 und S. 6 Z. 40 bis S. 7 Z. 50 und S 9 Z. 38 bis Z. 50 beschrieben werden.

Prinzipiell ist natürlich auch der Einsatz von Mischungen verschiedener Vernetzerharze möglich.

Die erfindungsgemäßen Polyester-Polyurethanharz-Dispersionen können zur Lackierung von Substraten verwendet werden.

Geeignete Substrate sind Kunstoffsubstrate, z.B. Styrol-Copolymere wie ASA (Acrylnitril-Styrol-Acrylester) oder ASA-Blends, ABS (Acrylnitril-Butadien-Styrol), ABS-Blends, wie ABS-Polycarbonat, Polycarbonat (PC) sowie PC/PBTP (Polycarbonat/Polybutylenterephthalat), PA(Polyamid) sowie PA/ABS-Blends oder Polyurethane, die im RIM (= Reaction Injection Molding) oder RRiM (= Reinforced RIM) Prozess hergestellt wurden. Weitere geeignete Substrate sind Holz, Metall, Leder oder Textilien.

Ebenfalls Gegenstand der vorliegenden Erfindung sind Kunststoffsubstrate, beschichtet mit Beschichtungsmitteln enthaltend die erfindungsgemäßen Polyester-Polyurethan-Dispersionen.

Gegenstand der Erfindung ist auch ein Lackaufbau, enthaltend ein Substrat, eine oder mehrere Lackschichten, dadurch gekennzeichnet, dass mindestens eine der Lackschichten die erfindungsgemäßen Polyester-Polyurethanharz-Dispersionen enthält. Bevorzugt ist ein einschichtiger Lackaufbau.

### Beispiele

Soweit nicht abweichend angegeben beziehen sich alle Prozentangaben auf Gewichtsprozent.

Viskositätsmessungen wurden mit einem Kegel-Platte-Viskosimeter Pysica Viscolab LC3 ISO der Firma Physica, Stuttgart, Deutschland nach DIN 53019 bei einem Schergefälle von 40 s⁻¹ durchgeführt.

Die Bestimmung der mittleren Teilchengröße erfolgte mittels Laser-Korrelations-Spektroskopie (Zetasizer^{®} 1000, Malvern Instruments, Herrenberg, Deutschland).

Die angegebenen OH-Zahlen wurden ausgehend von den eingesetzten Monomeren berechnet.

Säurezahlen: Bestimmungsmethode DIN ISO 3682.

### I) Allgemeine Herstellvorschrift für Polyester

In ein 5 L Reaktionsgefäß mit Rührer, Heizmantel, Thermometer, Destillationskolonne und Stickstoffeinlass werden die Säurekomponenten eingewogen und unter einem Stickstoffstrom von 10-12 L/h bei 160°C aufgeschmolzen. Anschließend wird der Rührer eingeschaltet, die Diolkomponenten zugegeben und der Stickstoffstrom auf 7 - 8 L/h reduziert. Die Reaktionsmischung wird langsam auf 200°C aufgeheizt. Dabei wird die Heizrate so reguliert, dass die Kolonnenkopftemperatur nicht 105°C übersteigt. Das Reaktionsgemisch wird bei 200°C gehalten, bis die Kolonnenkopftemperatur unter 90°C fällt. Dann wird die Kolonne entfernt und der Stickstoffstrom langsam auf 30 - 32 L/h erhöht. Unter diesen Reaktionsbedingungen wird gerührt, bis eine Säurezahl kleiner 1 erreicht wird.

### 1.1 Polyester A

| | |
|---|---|
| Adipinsäure | 7,1 mol = 1036,6 g |
| 1,6-Hexandiol | 5,4 mol = 637,2 g |
| Neopentylglykol | 2,7 mol = 280,8 g |
| Wasser | -14,2 mol = 255,6 g |
| Ester | 1,0 mol = 1699,0 g |

| | |
|---|---|
| OH-Z = 66,0 mg KOH/g | |

### I.2 Polyester B

| | |
|---|---|
| Phthalsäureanhydrid | 7,66 mol = 1133,7 g |
| 1,6-Hexandiol | 8,66 mol = 1021,9 g |
| Wasser | - 7,66 mol = 137,9 g |
| Ester | 1,00 mol = 2015,0 g |

| | |
|---|---|
| OH-Z = 55,7 mg KOH/g | |

### I.3 Polyester C

| | |
|---|---|
| Adipinsäure | 2,9 mol = 423,4 g |
| Phthalsäureanhydrid | 10,0 mol = 1480,0 g |
| 1,6-Hexandiol | 13,3 mol = 1569,4 g |
| Neopentylglykol | 1,3 mol = 134,2 g |
| Wasser | - 15,8 mol = 284,4 g |
| Ester | (1,7 mol) = 3322,6 g |

| | |
|---|---|
| OH-Z = 57,4 mg KOH/g | |

### II. Beschichtungsmittelkomponente

| | |
|---|---|
| Bayhydrol^{®} XP 2429: | wässrige, hydroxyfunktionelle Polyesterpolyurethan-Dispersion (Bayer AG, Leverkusen, DE) |
| Feststoffgehalt: | 55 Gew.-% in Wasser/NMP |
| Hydroxylgruppengehalt: | 0,8 Gew.-% |

### Beispiel 1: Vergleich (analog Beispiel 1 aus DE-A 2 651 506)

1632 Teile Polyester (A) werden bei 100°C im Vakuum von etwa 14 Torr entwässert und nach Zugabe von 85 Teilen eines Polyethermonoalkohols aus N-Butanol, Ethylenoxid und Propylenoxid (im Molverhältnis 83:17) der OH-Zahl 30, mit einem Gemisch aus 244,2 Teilen 1-Isocyanato-3,3,5-trimethyl-5-isocyanatomethyl-cyclohexan (Isophorondiisocyanat, Desmodur® I, Bayer AG Leverkusen) und 185 Teilen Hexandiisocyanat-1,6 (Desmodur® H, Bayer AG Leverkusen) versetzt. Die Mischung wird bei 100°C solange gerührt, bis sie einen Gehalt von 4,6 % Isocyanat (Theorie = 4,78%) aufweist. Nach dem Abkühlen auf 50-60°C werden 3200 Teile wasserfreien Acetons zugegeben. In diese acetonische Lösung wird ein Gemisch von 107 Teilen 1-Amino-3,3,5-trimethyl-5-aminomethyl-cyclohexan, 13,3 Teilen N-(2-Aminoethyl)-2-aminoethansulfon-saures Natrium und 10 Teilen Hydrazinmonohydrat, gelöst in 260 Teilen Wasser langsam eingerührt.

Nach 10-minütigem Nachrühren werden unter lebhaftem Rühren 3380 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion mit einem Feststoffgehalt von 40 ± 1 Gew.-%. Die Messung des Teilchendurchmessers mittels Laserkorrelation ergibt einen Wert von ca. 230 nm.

Der Festkörper des Dispersion enthält 2,9% Polyethylenoxidsegmente und 3,1 mmol Sulfonatgruppen (-SO₃^{⊖}) auf 100 g Festkörper.

Der Anteil aromatischer Carbonsäuregruppen bezogen auf Gesamtheit der Carbonsäuregruppen der Aufbaukomponente i) beträgt 0 Gew.%.

### Beispiel2 Vergleich

Eine Mischung aus 1275 Teilen Polyester (A) und 500 Teilen Polyester (B) wird bei 110°C im Vakuum von etwa 14 Torr entwässert und anschließend bei 70°C mit 300,7 Teilen Hexandiisocyanat-1,6 (Desmodur® H, Bayer AG Leverkusen) versetzt. Die Mischung wird bei 100°C solange gerührt, bis sie einen Gehalt von 3,00 % (Theorie = 3,20%) Isocyanat aufweist. Nach dem Abkühlen auf 50-60°C werden 3690 Teile wasserfreien Acetons zugegeben. In diese acetonische Lösung wird ein Gemisch von 42,75 Teilen N-(2-Aminoethyl)-2-aminoethansulfon-saures Natrium und 17,4 Teilen Ethylendiamin, gelöst in 390 Teilen Wasser langsam eingerührt. Nach 10-minütigem Nachrühren werden unter lebhaftem Rühren 2850 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wird durch Zugabe von Wasser auf 40 ± 1 Gew.-% eingestellt.

Die Messung des Teilchendurchmessers mittels Laserkorrelation ergab einen Wert von ca. 94 nm.

Der Festkörper des Dispersion enthält 10,3 mmol Sulfonatgruppen (-SO₃^{Θ}) auf 100 g Festkörper.

Der Anteil aromatischer Cabonsäuregruppen bezogen auf Gesamtheit der Carbonsäuregruppen der Aufbaukomponente i) beträgt 26,5 mol-%.

### Beispiel3: Vergleich

Eine Mischung aus 850 Teilen Polyester (A) und 1000 Teilen Polyester (B) wird bei 110°C im Vakuum von etwa 14 Torr entwässert und anschließend bei 70°C mit 300,7 Teilen Hexandiisocyanat-1,6 (Desmodur® H, Bayer AG Leverkusen) versetzt. Die Mischung wird bei 100°C solange gerührt, bis sie einen Gehalt von 2,79 % (Theorie = 3,08%) Isocyanat aufweist. Nach dem Abkühlen auf 50-60°C werden 3800 Teile wasserfreien Acetons zugegeben. In diese acetonische Lösung wird ein Gemisch von 42,75 Teilen N-(2-Aminoethyl)-2-aminoethansulfon-saures Natrium und 17,4 Teilen Ethylendiamin, gelöst in 390 Teilen Wasser langsam eingerührt. Nach 10-minütigem Nachrühren werden unter lebhaftem Rühren 2950 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wird durch Zugabe von Wasser auf 40 ± 1 Gew.-% eingestellt.

Die Messung des Teilchendurchmessers mittels Laserkorrelation ergab einen Wert von ca. 103 nm.

Der Festkörper des Dispersion enthält 10,3 mmol Sulfonatgruppen (-SO₃^{Θ}) auf 100 g Festkörper.

Der Anteil aromatischer Cabonsäurgruppen bezogen auf Gesamtheit der Carbonsäuregruppen der Aufbaukomponente i) beträgt 51,9 mol-%.

### Beispiel 4: erfindungsgemäß

Eine Mischung aus 425 Teilen Polyester (A) und 1500 Teilen Polyester (B) wird bei 110°C im Vakuum von etwa 14 Torr entwässert und anschließend bei 70°C mit 300,7 Teilen Hexandiisocyanat-1,6 (Desmodur^{®} H, Bayer AG Leverkusen) versetzt. Die Mischung wird bei 100°C solange gerührt, bis sie einen Gehalt von 2,74 % (Theorie = 2,98%) Isocyanat aufweist. Nach dem Abkühlen auf 50-60°C werden 3955 Teile wasserfreien Acetons zugegeben. In diese acetonische Lösung wird ein Gemisch von 42,75 Teilen N-(2-Aminoethyl)-2-aminoethansulfon-saures Natrium und 17,4 Teilen Ethylendiamin, gelöst in 390 Teilen Wasser langsam eingerührt. Nach 10-minütigem Nachrühren werden unter lebhaftem Rühren 3050 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wird durch Zugabe von Wasser auf 40 ± 1 Gew.-% eingestellt.

Die Messung des Teilchendurchmessers mittels Laserkorrelation ergab einen Wert von ca. 159 nm.

Der Festkörper des Dispersion enthält 9,9 mmol Sulfonatgruppen (-SO₃^{Θ}) auf 100 g Festkörper.

Der Anteil aromatischer Polycabonsäuren an den Aufbaukomponente i) beträgt 76,4 mol-%.

### Beispiel 5: erfindungsgemäß

2000 Teile Polyester (B) werden wird bei 110°C im Vakuum von etwa 14 Torr entwässert und anschließend bei 70°C mit 300,7 Teilen Hexandiisocyanat-1,6 (Desmodur® H, Bayer AG Leverkusen) versetzt. Die Mischung wird bei 100°C solange gerührt, bis sie einen Gehalt von 2,67 % (Theorie = 2,88%) Isocyanat aufweist. Nach dem Abkühlen auf 50-60°C werden 4040 Teile wasserfreien Acetons zugegeben. In diese acetonische Lösung wird ein Gemisch von 47,5 Teilen N-(2-Aminoethyl)-2-aminoethansulfon-saures Natrium und 17,4 Teilen Ethylendiamin, gelöst in 400 Teilen Wasser langsam eingerührt. Nach 10-minütigem Nachrühren werden unter lebhaftem Rühren 3150 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wird durch Zugabe von Wasser auf 40 ± 1 Gew.-% eingestellt.

Die Messung des Teilchendurchmessers mittels Laserkorrelation ergibt einen Wert von ca. 220 nm.

Der Festkörper des Dispersion enthält 10,5 mmol Sulfonatgruppen (-SO₃^{Θ}) auf 100 g Festkörper.

Der Anteil aromatischer Cabonsäurgruppen bezogen auf Gesamtheit der Carbonsäuregruppen der Aufbaukomponente i) beträgt 100 mol-%.

### Beispiel 6: erfindungsgemäß

1955 Teile Polyester (C) werden bei 100°C im Vakuum von etwa 14 Torr entwässert und nach Zugabe von 92,5 Teilen eines Polyethermonoalkohols aus N-Butanol, Ethylenoxid und Propylenoxid (im Molverhältnis 83:19) der OH-Zahl 30, mit einem Gemisch aus 254,2 Teilen 1-Isocyanato-3,3,5-trimethyl-5-isocyanatomethylcyclohexan Isophorondiisocyanat, Desmodur® I, Bayer AG Leverkusen) und 192,7 Teilen Hexandiisocyanat-1,6 (Desmodur® H, Bayer AG, Levekusen) versetzt. Die Mischung wird bei 100°C solange gerührt, bis sie einen Gehalt von 4,23% (Theorie = 4,28 %) Isocyanat aufweist. Nach dem Abkühlen auf 50-60°C werden 3740 Teile wasserfreien Acetons zugegeben. In diese acetonische Lösung wird ein Gemisch von 111,5 Teilen 1-Amino-3,3,5-trimethyl-5-aminomethyl-cyclohexan, 14,2 Teilen N-(2-Aminoethyl)-2-aminoethansulfon-saures Natrium und 10,4 Teilen Hydrazinmonohydrat, gelöst in 280 Teilen Wasser langsam eingerührt. Nach 10-minütigem Nachrühren werden unter lebhaftem Rühren 3660 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wurde durch Zugabe von Wasser auf 40 ± 1 Gew.-% eingestellt.

Die Messung des Teilchendurchmessers mittels Laserkorrelation ergab einen Wert von ca. 160 nm.

Der Festkörper des Dispersion enthält 2,75% Polyethylenoxidsegmente und 2,9 mmol Sulfonatgruppen (-SO₃^{Θ}) auf 100 g Festkörper.

Der Anteil aromatischer Polycabonsäuren an den Aufbaukomponente i) beträgt 76,4 mol-%.

### Beispiel 7: erfindungsgemäß

2000 Teile Polyester (B) werden wird bei 110°C im Vakuum von etwa 14 Torr entwässert und anschließend bei 90°C mit 485 Teilen 4,4'-Diisocyanato-dicyclohexylmethan (Desmodur® W, Bayer AG Leverkusen) versetzt. Die Mischung wird bei 115°C solange gerührt, bis sie einen Gehalt von 2,71 % (Theorie = 2,87%) Isocyanat aufweist. Nach dem Abkühlen auf 50-60°C werden 4420 Teile wasserfreien Acetons zugegeben. In diese acetonische Lösung wird ein Gemisch von 62,7 Teilen N-(2-Aminoethyl)-2-aminoethansulfon-saures Natrium und 21 Teilen Ethylendiamin, gelöst in 540 Teilen Wasser langsam eingerührt. Nach 10-minütigem Nachrühren werden unter lebhaftem Rühren 3350 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion.

Der Feststoffgehalt wird durch Zugabe von Wasser auf 40 ± 1 Gew.-% eingestellt.

Die Messung des Teilchendurchmessers mittels Laserkorrelation ergibt einen Wert von ca. 230 nm.

Der Festkörper des Dispersion enthält 12,8 mmol Sulfonatgruppen (-SO₃^{Θ}) auf 100 g Festkörper.

Der Anteil aromatischer Cabonsäurgruppen bezogen auf Gesamtheit der Carbonsäuregruppen der Aufbaukomponente i) beträgt 100 mol-%.

### III. Anwendungstechnischer Teil

### III.1 Einschichtiger, wässriger 2K-Softfeel-Lack

**Tabelle 1: Angaben beziehen sich auf Gewichts-Teile.**

| Beispiel 7 | A | B | C | D | E | F |
|---|---|---|---|---|---|---|
| | Vergleich | | | erfindungsgemäß | | |
| Beispiel 1 | 110 | | | | | |
| Beispiel 2 | | 110 | | | | |
| Beispiel 3 | | | 110 | | | |
| Beispiel 4 | | | | 110 | | |
| Beispiel 5 | | | | | 110 | |
| Beispiel 6 | | | | | | 110 |
| Bayhydrol^{®} XP 2429¹⁾ | 100 | 100 | 100 | 100 | 100 | 100 |
| Wasser | 90 | 90 | 90 | 90 | 90 | 90 |
| Byk^{®} 348²⁾ | 0,8 | 0,8 | 0,8 | 0,8 | 0,8 | 0,8 |
| Entschäumer DNE³⁾ | | | | | | |
| Tegowet^{®} KL245⁴⁾ (50%ig in Wasser) | 1,1 | 1,1 | 1,1 | 1,1 | 1,1 | 1,1 |
| Aquacer^{®} 535²⁾ | 5,6 | 5,6 | 5,6 | 5,6 | 5,6 | 5,6 |
| Sillitin^{®} Z86⁵⁾ | 12,7 | 12,7 | 12,7 | 12,7 | 12,7 | 12,7 |
| Pergopak^{®} M3⁶⁾ | 19,1 | 19,1 | 19,1 | 19,1 | 19,1 | 19,1 |
| Talkum IT extra⁷⁾ | 6,4 | 6,4 | 6,4 | 6,4 | 6,4 | 6,4 |
| Bayferrox^{®} 318M¹⁾ | 50,8 | 50,8 | 50,8 | 50,8 | 50,8 | 50,8 |
| Mattierungsmittel OK412⁸⁾ | 6,4 | 6,4 | 6,4 | 6,4 | 6,4 | 6,4 |
| | | | | | | |
| Bayhydur^{®} 3100¹⁾ (75%ig in Methoxy-propylacetat) | 22,7 | 22,7 | 22,7 | 22,7 | 22,7 | 22,7 |

| | | | | | | |
|---|---|---|---|---|---|---|
| 1) Bayer AG, Leverkusen, DE 2) BYK-Chemie, Wesel, DE 3) K. Obermayer, Bad Berleburg, DE 4) TegoChemie Service, Essen, DE 5) Hoffmann & Söhne, Neuburg, DE 6) Deuteron GmbH, Achim, DE 7) Norwegian Talc, Frankfurt a. M., DE 8) Degussa, Frankfurt a. M., DE | | | | | | |

### III.2 Haftung auf Kunststoffsubstrat

Die Einschichtdecklack-Formulierungen gemäß Tabelle 1 werden auf Kunststoffplatten der Abmessungen 148 x 102 x 3 mm aufgespritzt (3-5 bar, Düsengröße 1,4, Trockenfilmschichtdicke ca. 30 µm). Vor Spritzapplikation werden die Lacke auf Spritzviskosität (25-30s in ISO 5) eingestellt. Die Muster werden 10 Minuten bei Raumtemperatur und 30 Minuten bei 80°C getrocknet. Die Haftung wird mittels Gitterschnitt beurteilt. Die Beurteilung erfolgte visuell in Stufen von 0 bis 5, wobei 0 keine Ablösung und 5 vollständige Ablösung (DIN 53 151 mit Klebebandabriss) bedeutet.

### III.2.1 Haftung nach Gitterschnitt

**Tabelle 2: Beurteilung des Gitterschnitts**

| | Vergleich | | | erfindungsgemäß | | |
|---|---|---|---|---|---|---|
| **Beispiel 7** | **A** | **B** | **C** | **D** | **E** | **F** |
| Bayblend^{®} T65MN¹⁾ | 1 | 2 | 1 | 0 | 0 | 0 |
| Novodur^{®} PKT ¹⁾ | 3 | 4 | 1 | 2 | 0 | 1 |
| Pocan^{®} S1506¹⁾ | 1 | 2 | 2 | 1 | 0 | 1 |
| Durethan^{®} BC304¹⁾ | 5 | 5 | 5 | 3 | 1 | 2 |

| | | | | | | |
|---|---|---|---|---|---|---|
| 1) Bayer AG, Leverkusen, DE | | | | | | |

Man erkennt, dass die erfindungsgemäßen Beispiele eine wesentlich bessere Haftung zu den geprüften Problemsubstraten haben, als die Beschichtungen nach dem Stand der Technik.

## Patentansprüche

1. Verfahren zur Herstellung von Polyester-Polyurethanharz-Dispersionen, **dadurch gekennzeichnet, dass**
i) ein oder mehrere Polyol-Komponenten i) mit einem mittleren Molekulargewicht von mindestens 300 Dalton, wobei mindestens eine der Komponenten ein Polyester-Polyol ist und der auf aromatischen Polycarbonsäuren basierende Anteil Polyesterpolyol mehr als 60 Gew.-% beträgt,
ii) gegebenenfalls eine oder mehrere Polyolkomponenten mit einem mittleren Molekulargewicht von 62 bis 299 Dalton,
iii) gegebenenfalls eine im Sinne der Isocyanatpolyadditionsreaktion monofunktionelle Verbindung mit einem Ethylenoxidgehalt von mindestens 50 Gew.-% und einem Molekulargewicht von mindestens 400 Dalton mit
iv) einem Polyisocyanat zu einem Prepolymer umgesetzt werden,
dieses Prepolymer in einem organischen Lösemittel gelöst und mit
v) einer oder mehreren aliphatischen Polyaminen mit einem Molekulargewicht von 60 bis 300 Dalton oder Hydrazin und
vi) einem hydrophilierten aliphatischen Diamin
umgesetzt wird, anschließend durch Zugabe von Wasser die Dispersion ausgefällt und das organische Lösemittel entfernt wird.

2. Verfahren gemäß Anspruch 1, **dadurch gekennzeichnet, dass** der auf aromatischen Polycarbonsäuren basierende Anteil Polyesterpolyole mehr als 60 Gew.-% beträgt.

3. Verfahren gemäß Anspruch 1, **dadurch gekennzeichnet, dass** der Anteil aromatischer Carbonsäuregruppen bezogen auf die Gesamtheit der zur Herstellung der Polyester-Komponente eingesetzten Carbonsäuregruppen in der Polyol-Komponente i) mindestens 70 mol-% beträgt.

4. Verfahren gemäß Anspruch 1, **dadurch gekennzeichnet, dass** der Anteil aromatischer Carbonsäuregruppen bezogen auf die Gesamtheit der zur Herstellung der Polyester-Komponente eingesetzten Carbonsäuregruppen in der Polyol-Komponente i) mindestens 80 mol-% beträgt.

5. Polyester-Polyurethanbarz-Dispersionen erhältlich gemäß Anspruch 1.

6. Beschichtungsmittel enthaltend
A) 15 bis 45 Gew.-Teile einer wässrigen Polyester-Polyurethanbarz-Dispersion gemäß Anspruch 5,
B) 15 bis 45 Gew.-Teile eines hydroxyfunktionellen, wässrigen oder wasserverdünnbaren Bindemittel,
C) 0 bis 60 Gew.-Teile eines anorganischen Füllstoffes und/oder Mattierungsmittels,
D) 1 bis 60 Gew.-Teile eines Polyisocyanates,
E) 0,1 bis 30 Gew.-Teile Pigmente und
F) 1 bis 15 Gew.-Teile üblicher Lackhilfsmittel,
wobei die Summe der Komponenten 100 ergibt.

7. Lackaufbau, enthaltend ein Substrat und eine oder mehrere Lackschichten, **dadurch gekennzeichnet, dass** mindestens eine der Lackschichten die Polyester-Polyurethanharz-Dispersion gemäß Anspruch 5 enthält.

## Claims

1. Process for preparing polyester-polyurethane resin dispersions, **characterized in that**
i) one or more polyol components i) having an average molecular weight of at least 300 daltons, at least one of the components being a polyester polyol and the fraction of polyester polyol based on aromatic polycarboxylic acids being more than 60% by weight,
ii) optionally one or more polyol components having an average molecular weight of 62 to 299 daltons,
iii) optionally a compound which is monofunctional for the purposes of the isocyanate polyaddition reaction and has an ethylene oxide content of at least 50% by weight and a molecular weight of at least 400 daltons are reacted with
iv) a polyisocyanate to form a prepolymer,
which is dissolved in an organic solvent and reacted with
v) one or more aliphatic polyamines having a molecular weight of 60 to 300 daltons or hydrazine and
vi) a hydrophilicized aliphatic diamine,
the dispersion is subsequently precipitated by adding water, and the organic solvent is removed.

2. Process according to Claim 1, **characterized in that** the fraction of polyester polyol based on aromatic polycarboxylic acids is more than 60% by weight.

3. Process according to Claim 1, **characterized in that** the fraction of aromatic carboxylic acid groups, relative to all of the carboxylic acid groups used to prepare the polyester component, in the polyol component i) is at least 70 mol%.

4. Process according to Claim 1, **characterized in that** the fraction of aromatic carboxylic acid groups, relative to all of the carboxylic acid groups used to prepare the polyester component, in the polyol component i) is at least 80 mol%.

5. Polyester-polyurethane resin dispersions obtainable according to Claim 1.

6. Coating compositions comprising
A) 15 to 45 parts by weight of an aqueous polyester-polyurethane resin dispersion according to Claim 5,
B) 15 to 45 parts by weight of a hydroxy-functional, aqueous or water-dilutable binder,
C) 0 to 60 parts by weight of an inorganic filler and/or matting agent,
D) 1 to 60 parts by weight of a polyisocyanate,
E) 0.1 to 30 parts by weight of pigments and
F) 1 to 15 parts by weight of customary coatings auxiliaries,
the sum of the components making 100.

7. Coating system comprising a substrate and one or more coating films, **characterized in that** at least one of the coating films comprises the polyester-polyurethane resin dispersion according to Claim 5.

## Revendications

1. Procédé de fabrication de dispersions de résine de polyester-polyuréthane, **caractérisé en ce que**
i) un ou plusieurs composants polyol i) d'un poids moléculaire moyen d'au moins 300 Daltons, au moins un des composants étant un polyester-polyol et la proportion à base d'acides polycarboxyliques aromatiques du polyester-polyol étant supérieure à 60 % en poids,
ii) éventuellement un ou plusieurs composants polyol d'un poids moléculaire moyen de 62 à 299 Daltons,
iii) éventuellement un composé monofonctionnel au sens de la réaction de polyaddition d'isocyanate ayant une teneur en oxyde d'éthylène d'au moins 50 % en poids et un poids moléculaire d'au moins 400 Daltons, sont mis en réaction avec
iv) un polyisocyanate pour former un prépolymère, ce prépolymère est dissous dans un solvant organique et mis en réaction avec
v) une ou plusieurs polyamines aliphatiques d'un poids moléculaire de 60 à 300 Daltons ou de l'hydrazine, et
vi) une diamine aliphatique hydrophilisée, puis la dispersion est précipitée par ajout d'eau et le solvant organique est éliminé.

2. Procédé selon la revendication 1, **caractérisé en ce que** la proportion à base d'acides polycarboxyliques aromatiques du polyester-polyol est supérieure à 60 % en poids.

3. Procédé selon la revendication 1, **caractérisé en ce que** la proportion de groupes acide carboxylique aromatiques par rapport à la totalité des groupes acide carboxylique utilisés pour la fabrication du composant polyester dans le composant polyol i) est d'au moins 70 % en moles.

4. Procédé selon la revendication 1, **caractérisé en ce que** la proportion de groupes acide carboxylique aromatiques par rapport à la totalité des groupes acide carboxylique utilisés pour la fabrication du composant polyester dans le composant polyol i) est d'au moins 80 % en moles.

5. Dispersions de résine de polyester-polyuréthane pouvant être obtenues selon la revendication 1.

6. Agent de revêtement contenant
A) 15 à 45 parties en poids d'une dispersion de résine de polyester-polyuréthane selon la revendication 5,
B) 15 à 45 parties en poids d'un liant à fonction hydroxy, aqueux ou diluable par de l'eau,
C) 0 à 60 parties en poids d'une charge inorganique et/ou d'un agent matant,
D) 1 à 60 parties en poids d'un polyisocyanate,
E) 0,1 à 30 parties en poids de pigments et
F) 1 à 15 parties en poids d'adjuvants de laque usuels, la somme des composants étant de 100.

7. Structure laquée, contenant un substrat et une ou plusieurs couches de laque, **caractérisée en ce qu'**au moins une des couches de laque contient la dispersion de résine de polyester-polyuréthane selon la revendication 5.
